# EUROPEAN PATENT SPECIFICATION

(11) **EP 1 991 019 B1**
(45) Date of publication and mention of the grant of the patent: **02.04.2014**
(21) Application number: 07702044.4
(22) Date of filing: 11.01.2007
(51) Int. Cl.: H04W 4/14, H04Q 3/00

(54) **A method, service control device and communication system for realizing the service of one card for multiple numbers**
Verfahren, Dienststeuervorrichtung und Kommunikationssystem zur Realisierung des Dienstes einer Karte für mehrere Nummern
Procédé, dispositif de commande de service et système de communication pour réaliser le service d'une carte à plusieurs numéros

(30) Priority: 01.03.2006 CN 200610034095
(43) Date of publication of application: 12.11.2008
(73) Proprietor: Huawei Technologies Co., Ltd., Longgang District, Shenzhen Guangdong 518129 (CN)
(72) Inventor: CAI, Yongfeng, Guangdong Province 518129 (CN); XU, Junrong, Guangdong Province 518129 (CN)
(74) Representative: Isarpatent
(86) International application number: PCT/CN2007/000112
(87) International publication number: WO 2007/098668

(56) References cited:
- WO-A-2005/018245
- CN-A- 1 411 314
- CN-A- 1 678 119

## Description

This application claims a priority from the Chinese Patent Application No. 200610034095.4, filed with the Chinese Patent Office on March 01, 2006 and entitled "Method for Implementing the One Card Multinumber Service".

### Field of the Invention

The present invention relates to mobile communications, and in particular, to a method, service control point (SCP), and communication system for enabling a mobile user to use multiple numbers on one subscriber identity module (SIM) or user identity module (UIM), known as one card multinumber service.

### Background of the Invention

With fiercer competition in the current communication market, operators attach more and more importance to segmented markets. The focus of competition is diverted to better services for users. For this purpose, operators are eager to develop services that are competitive and appealing to users.

In the prior art, one mobile user generally owns one SIM card and one mobile station international ISDN number (MSISDN) on a GSM network, or owns one UIM card and one mobile directory number (MDN) on a CDMA network, where the MSISDN or MDN is popularly known as a user number or mobile number. One user number corresponds to one SIM/UIM uniquely. Through this user number, the user makes/receives calls and sends/receives short messages.

Some mobile users have customers distributed in different cities, and need to do businesses between regions which are usually the home locations of different mobile numbers. If these users only tell their customers the mobile numbers of certain home locations, the customers outside the home locations will probably give up making calls to the users because the calls are long distance calls, and thus the users lose this part of business opportunities. Moreover, mobile users who make calls on a network whose home locations are different with the home locations of the mobile users have to undertake high roaming charges and toll charges. Among such users, therefore, one user tends to have multiple SIM/UIM cards, each belonging to a different home location/city. While staying in a specific city, the user uses the SIM/UIM card that belongs to this city, and forwards calls between the user numbers of different SIM/UIM cards. However, the call forwarding service does not support receiving of short messages. Therefore, some users even carry and power on multiple mobile phones with different SIM/UIM cards at the same time. This practice is defective because a mobile user has to purchase multiple SIM/UIM cards or even multiple mobile phones, which brings much inconvenience.

Document WO 2005/018245 A2, 24. February 2005, discloses a SIM that includes at least one IMSI and at least one MSISDN in a mobile communications device. The SIM is used to receive and place calls while the user is in the users home network and while the user is roaming in another network. In various embodiments, one of a home MSISDN and a local MSISDN is used.

### Summary of the Invention

A method for enabling a mobile user to use multiple numbers on one subscriber identity module (SIM) or user identity module (UIM) provided in the present invention includes: setting up the correspondence between the original user number of the SIM/UIM card (the master number) and the added user number (the slave number) in a service control point (SCP), where a home location of the slave number is different from a home location of the master number; and determining, by the SCP, the user number to be displayed at the peer side according to a preset display policy and the correspondence between the master number and the slave number when receiving a master number and a peer number sent by a communication service processor.

A service control point (SCP) provided in the present invention includes: an associating unit, adapted to provide a correspondence between the original user number of the SIM/UIM card (the master number) and the added user number (the slave number) of a user, wherein the home location of the slave number is different from the home location of the master number; and a service logic unit, comprises a number display logic module(121), adapted to receive the master number of an originating user sent by a communication service processor, and a number of the peer side; and among the master number and the associated slave number, select a number as the calling number to be displayed at the peer side according to a preset display policy, and notify the selected number to the communication service processor.

The method for enabling a mobile user to use multiple numbers on one SIM or UIM in the present invention brings the following benefits: for a terminal user, one SIM/UIM card may have multiple numbers of different home locations, and each number may be used for a specific area or a specific contact group, thus realizing privacy of personal numbers; and the user applies for slave numbers of different home locations, thus saving roaming charges and toll charges; and for multiple numbers in one SIM/UIM card, it is practicable to either charge each number separately or charge all numbers uniformly, thus helping the user separate the office call charges from the private call charges. For operators, the one card multinumber service attracts high-end users, and protects privacy of the personal numbers of users;
by allocating slave numbers, operators obtain stable monthly-fee revenues and the one card multinumber enhances the network competitiveness.

### Brief Description of the Drawings

The present invention is described in detail hereinafter with reference to the embodiments and the accompanying drawings.
Figure 1 shows the networking of the one card multinumber service;
Figure 2 shows the process of originating a call by a one card multinumber user in an embodiment of the invention;
Figure 3 shows the process of receiving a call by a one card multinumber user in an embodiment of the invention;
Figure 4 shows the process of sending a short message by a one card multinumber user in an embodiment of the invention;
Figure 5 shows the process of receiving a short message by a one card multinumber user in an embodiment of the invention;
Figure 6 shows the structure of an SCP in an embodiment of the invention; and
Figure 7 shows the structure of a communication system in an embodiment of the present invention.

### Detailed Description of the Invention

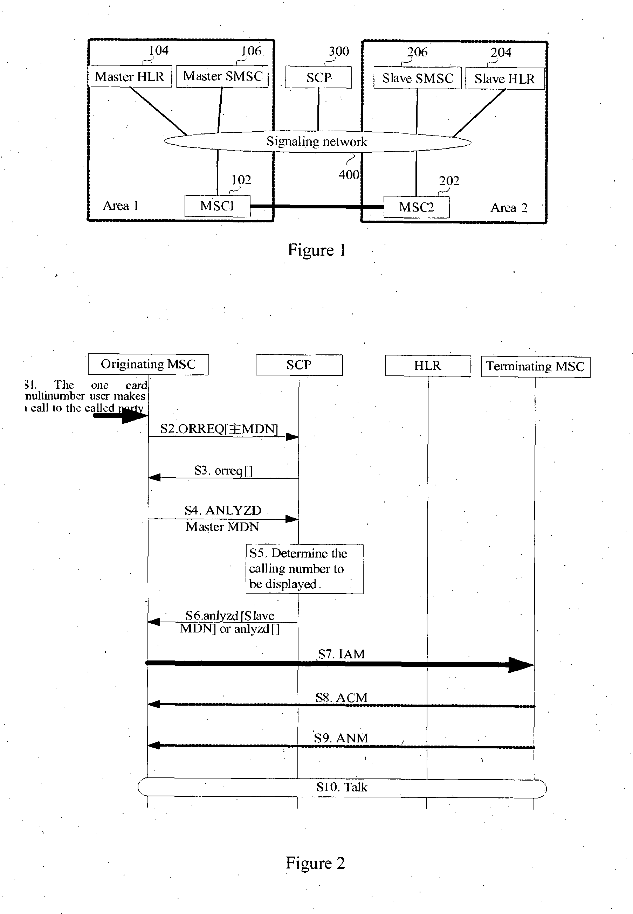

Figure 1 shows the networking of the one card multinumber service. Before the one card multinumber service is available, the user number of a SIM/UIM card can only belong to one area, for example, area 1 in Figure 1. When subscribing to the one card multinumber service for a SIM/UIM card, a user may add one or more user numbers of different areas (for example, area 2 in Figure 1). In this case, the original user number of the SIM/UIM card is referred to as a "master user number" ("master number" for short), and the added user number is referred to as a "slave user number" ("slave number" for short). The mobile operator registers the subscription information about the master number in the HLR of the master number, namely, the master HLR 104; and the SCP address of the trigger is the address of the SCP 300 that implements the one card multinumber service. The mobile operator registers the subscription information about the slave number in the HLR of the slave number, namely, the slave HLR 204; and the SCP address of the trigger is the address of the SCP 300 that implements the one card multinumber service. In the short message service centers (SMSCs) of the master number and the slave number, namely, master SMSC 106 and slave SMSC 206, the mobile operator registers the SCP address of the master number and the slave number as the address of the SCP that implements the one card multinumber service. Besides, the mobile operator sets up a correspondence between the master number and the slave number in the SCP 300 that implements the one card multinumber service. The mobile switching centers MSC1 102 and MSC2 202 in areas 1 and 2 interact with the master HLR 104, slave HLR 204, master SMSC 106, slave SMSC 206, and SCP 300 through a signaling network 400. In this way, no matter which user number of the SIM/UIM card is used for communications, the service can be triggered to the SCP that implements the one card multinumber service; no matter which number triggers the service to the SCP, the SCP can perform routing and charging correctly according to the correspondence between the master number and the slave number.

When a one card multinumber user originates a call, the user may select a different calling number among the master number and the associated slave numbers for being displayed to the called party, thus making each number specific to each different area and each different contact group. The following describes the signaling process of originating a call by a one card multinumber user, taking the CDMA network as an example. Suppose that the calling party is user A who has subscribed to the one card multinumber service, and that the called party "user B" is idle. As shown in Figure 2, the call process includes:
Step S1: The calling user A dials the number of the called user B, calling the called user B.
Step S2: The visited MSC of the calling user A (hereinafter referred to as "originating MSC") sends an ORREQ message to the SCP. In this message, the "MDN" parameter includes the master number of the one card multinumber user, namely, "master MDN"; the "Digits" parameter includes the called number dialed by user A; the "MSCID" parameter includes the identifier of the originating MSC of user A, and this identifier may be used to obtain information about the visited location of user A.
Step S3: After authenticating the calling user A, the SCP returns an ORREQ response message to the originating MSC, instructing the originating MSC to continue processing the service.
Step S4: The originating MSC analyzes the called number, and sends an ANLYZD message inclusive of the "master MDN" to the SCP.
Step S5: The SCP decides display of the calling number according a preset display policy. The display policy may be included in the subscription information about the one card multinumber user, and is set by the user. For example, user A may preset: for specific called numbers, displaying the master number or a slave number to the called user B as a calling number. In this way, the number for business contact may be separated from the personal private number. Also, user A may preset: displaying a different calling number according to each different visited location of the calling user A. For example, when user A is in the home location of the master number, the master number is displayed as the calling number; when user A is in the home location of a slave number, the slave number is displayed as the calling number. In this way, the charges incurred by the user as a called user B will be reduced. Moreover, user A may preset: displaying a different calling number according to each different home location of the called user B, so that each number is used for a specific area only.
Step S6: The SCP sends an ANLYZD response message to the originating MSC. If the calling number determined by the SCP for displaying is a slave number rather than the master number of user A, the ANLYZD message carries the modified calling number, namely, "slave MDN"; if the calling number determined by the SCP for displaying is the master number which needs no modification, the ANLYZD message does not need to carry the calling number, and the process is the same as an ordinary call process in current practice.
   In the subsequent processing, the originating MSC routes the call to the called terminating office, and displays the calling number as instructed by the SCP. The routing process may be the same as that of ordinary call processing in current practice, generally including:
Step S7: The originating MSC sends an initial address message (IAM) to the visited MSC of user B (hereinafter referred to as "terminating MSC"),and routes the call to the terminating MSC. This message contains the routing information of the called user and the calling number information for displaying ("master MDN" or "slave MDN").
Step S8: When the called user B is idle, the terminating MSC sends an address complete message (ACM) to the originating MSC. In this case, the mobile terminal of the called user B displays the calling number ("master MDN" or "slave MDN") determined by the SCP if the caller ID display (CID) function is available.
Step S9: The called user B answers the call, and the terminating MSC sends an Answer Message (ANM) to the originating MSC.
Step S10: The calling user A talks with the called user B.

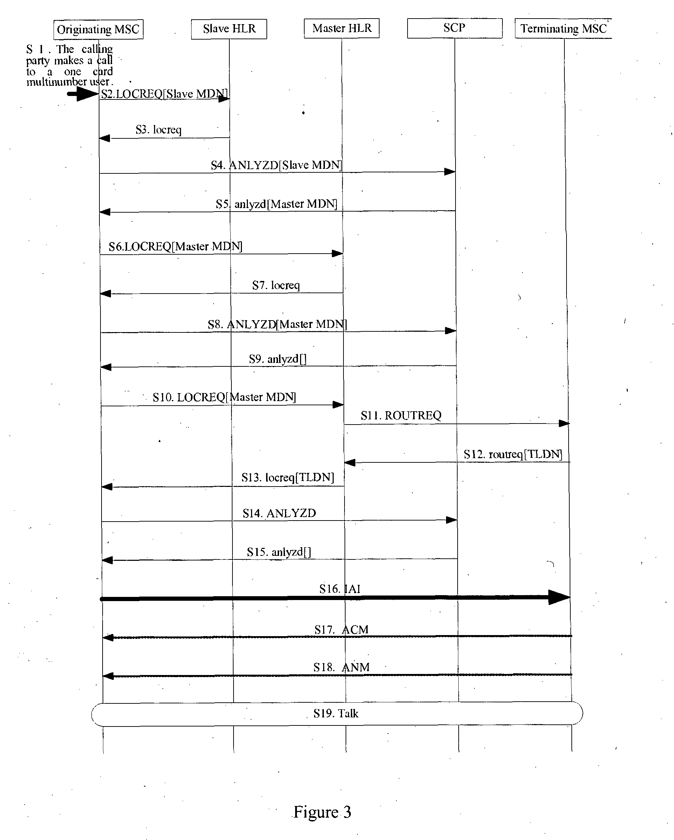

The following describes the signaling process of receiving a call by a one card multinumber user, taking the CDMA network as an example. Suppose that user A originates a call to user B who is a one card multinumber user in the idle state. The process of originating a call to the "master MDN" of user B is the same as an ordinary call process in current practice. The following describes only the process of originating a call to the "slave MDN" of user B. As shown in Figure 3, the call process includes:
Step S1: The calling user A dials the slave MDN of the called user B who has subscribed to the one card multinumber service. In this case, if the calling user A and the called user B belong to the same network (namely, served by the same network of the same operator), the called process is started at the visited MSC of the calling user A; if the calling user A and the called user B belong to different networks, the called process is started at the gateway MSC (GMSC).
Step S2: The visited MSC or the GMSC of the calling user A (hereinafter referred to as "originating MSC") sends a location request (LOCREQ) message to the slave HLR of the called user B to obtain the subscription information about the slave number ("slave MDN") of the called user B, the message carries the slave MDN of the called user B.
Step S3: By sending a LOCREQ response message, the slave HLR returns the subscription information about the slave MDN of the called user B to the originating MSC.
Step S4: The originating MSC triggers the service process of the slave number (namely, "slave MDN") of the called user B, and sends an ANLYZD request message to the SCP; the message carries the slave MDN of the called user B.
Step S5: The SCP authenticates the called number (namely, "slave MDN"), and finds that the one card multinumber service is triggered. According to the subscription information about the one card multinumber user, the SCP determines that the called number is not a master number. Afterward, the SCP sends an ANLYZD response message inclusive of the master MDN information, instructing the originating MSC to route the call to the master MDN.
Step S6: The originating MSC receives the ANLYZD response message, analyzes the master MDN included in the message, and is ready to route the call to the master MDN. The originating MSC sends a LOCREQ message to the master HLR of the called user B to obtain the subscription information about the master MDN of the called user B.
Step S7: By sending a LOCREQ response message, the master HLR returns the subscription information about the master MDN of the called user B to the originating MSC.
Step S8: The originating MSC triggers the service process of the master MDN of the called user B, and sends an ANLYZD request message to the SCP. The "MDN" parameter in this message carries the master MDN of the one card multinumber user.
Step S9: The SCP authenticates the called number, and finds that the one card multinumber service is triggered. The SCP sends an ANLYZD message, instructing the originating MSC to continue with the call processing.
   Subsequently, the originating MSC routes the call to the visited MSC of user B (hereinafter referred to as "terminating MSC") according to the master MDN of the called party. The routing process is the same as an ordinary call process in current practice. If the calling party and the called party are located in different MSCs, the call process generally includes the following steps (in special cases, when the calling user A and the called user B are in the same MSC, the following S11 and S12 are generally omitted in the call process in current practice):
Step S10: The originating MSC sends a LOCREQ message to the master HLR to obtain the temporary local directory number (TLDN) of the master MDN of the called user B.
Step S11: The master HLR sends a routing request (ROUTREQ) message to the terminating MSC to obtain the TLDN of the master MDN of the called user B.
Step S12: The terminating MSC allocates a TLDN and returns the TLDN to the master HLR through a ROUTREQ response message.
Step S 13: The master HLR sends a LOCREQ response message to the originating MSC; the message carries the TLDN of the master MDN of the called user B.
Step S14: The originating MSC sends an ANLYZD request message to the SCP; the message carries the information about the visited location of the one card multinumber user.
Step S15: The SCP sends an ANLYZD response message, instructing the originating MSC to continue with the call processing.
Step S16: The originating MSC routes the call to the terminating MSC. The originating MSC sends an initial address message (IAM) to the terminating MSC. In this message, the called number is the TLDN of the master MDN of the called user B, and the calling number is the number of the calling user A.
Step S17: When the called user B is idle, the terminating MSC returns an address complete message (ACM) to the originating MSC.
Step S18: The called user B goes off-hook. The terminating MSC sends an Answer Message (ANM) to the originating MSC.
Step S 19: The calling user A talks with the called user B.

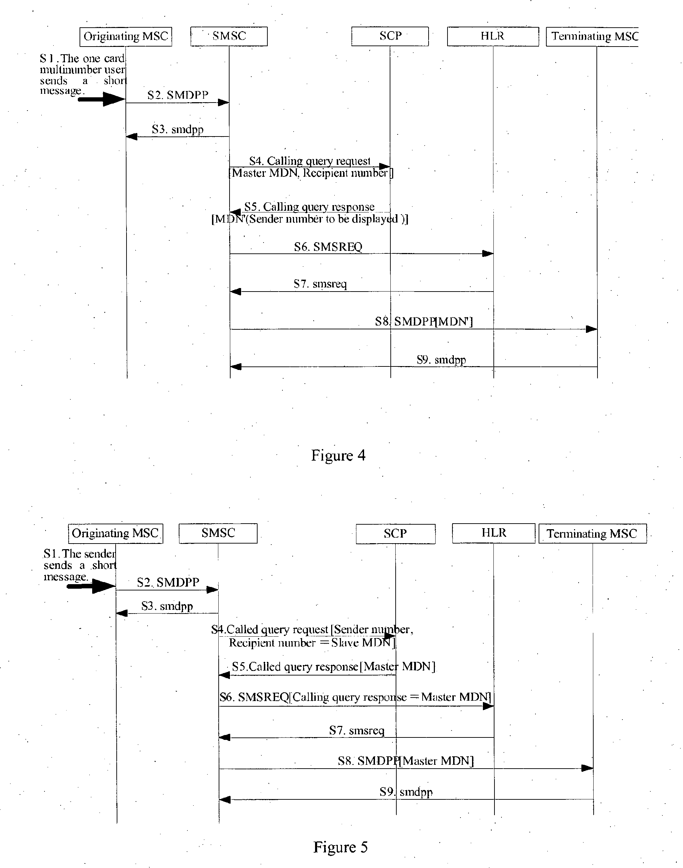

The following describes the signaling process of sending a short message by a one card multinumber user, taking the CDMA network as an example. Suppose the user ("sender") who sends a short message has subscribed to the one card multinumber service; and the user who receives the short message is recipient B. As shown in Figure 4, the process includes:
Step S1: The one card multinumber user A sends a short message to the user B.
Step S2: The visited MSC of the sender A (hereinafter referred to as "originating MSC") sends a short message delivery point-to-point (SMDPP) message to the short message service center (SMSC).
Step S3: The SMSC returns an SMDPP response message to the originating MSC.
Step S4: The SMSC finds that the sender A is a one card multinumber user, and sends a calling query request message to the SCP, the message carries the sender number ("master MDN") and the recipient number.
Step S5: According to the display policy preset by the one card multinumber user, the SCP decides display of the calling number. For example, according to the home location of the recipient number and the configured policy, the SCP determines the sender number to be displayed. The policy of displaying the calling number is similar to the display policy in the process of originating a call by a one card multinumber user. Afterward, the SCP returns a calling query response message to the SMSC; the message carries the recipient MDN (master MDN or slave MDN) to be displayed.
Step S6: The SMSC sends a short message service request (SMSREQ) message to the HLR of the recipient B to obtain the visited location of the recipient B.
Step S7: The HLR of the recipient B returns an SMSREQ message, carrying the information about the visited location of the recipient B.
Step S8: The SMSC sends an SMDPP request message to the visited MSC of the recipient B (hereinafter referred to as "terminating MSC). In this message, the sender number is the MDN (master MDN or slave MDN) determined by the SCP.
Step S9: The terminating MSC returns an SMDPP response message to the SMSC.

The following describes the signaling process of receiving a short message by a one card multinumber user, taking the CDMA network as an example. The process of sending a short message to the master MDN is the same as an ordinary short message process in current practice. The following only describes the process of sending a short message from sender A to the slave MDN of a one card multinumber user (recipient B). As shown in Figure 5, the process includes:
Step S 1: The sender A sends a short message to the slave MDN of the user B who has subscribed to the one card multinumber service.
Step S2: The visited MSC of the sender A (hereinafter referred to "originating MSC) sends a short message delivery point-to-point (SMDPP) message to the short message service center (SMSC).
Step S3: The SMSC returns an SMDPP response message to the originating MSC.
Step S4: After receiving the short message, the SMSC finds that the recipient number is a slave MDN, and sends a called query request message to the SCP, and the message carries the sender number and the recipient number (namely, slave MDN).
Step S5: According to the slave MDN, the SCP finds the master MDN of the recipient B, and returns a called query response message to the SMSC, the message carries the master MDN of the recipient.
Step S6: The SMSC sends a short message service request (SMSREQ) message to the HLR of the master MDN of the recipient B to obtain the visited location of the one card multinumber user B.
Step S7: The HLR returns an SMSREQ response message, and the message carries the information about the visited location of the one card multinumber user B.
Step S8: The SMSC sends an SMDPP request message to the visited MSC of the recipient B (hereinafter referred to as "terminating MSC"). In this message, the recipient number is the master MDN. The one card multinumber user receives the short message.
Step S9: The terminating MSC returns an SMDPP response message to the SMSC.

The above is a detailed process of implementing the one card multinumber service in a CDMA network in embodiments of the present invention. It is understood that the foregoing method of the present invention is also applicable to other mobile communication networks such as GSM except that the signaling process needs to be adjusted according to specific networks and general specifications.

The following embodiment provides an apparatus applicable to the foregoing method.

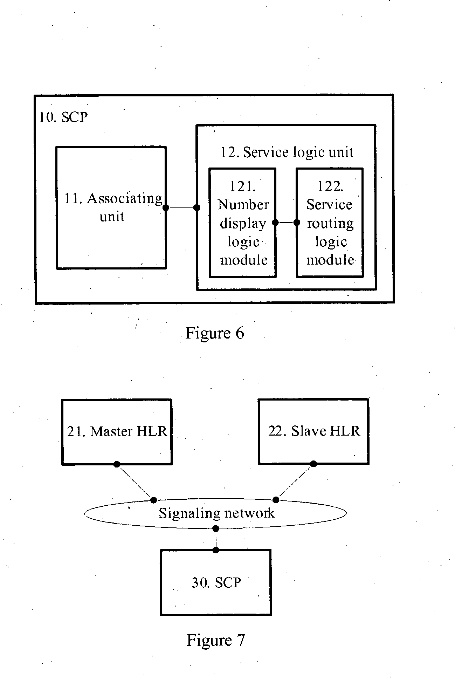

As shown in Figure 6, a service control point (SCP) 10 includes an associating unit 11 and a service logic unit 12.

The associating unit 11 is adapted to provide a correspondence between the master number and the slave number of a user, the home location of the slave number is different from the home location of the master number.

The service logic unit 12 further includes a number display logic module 121 and a service routing logic module 122, wherein:
the number display logic module 121 is adapted to receive the master number of an originating user sent by a communication service processor, and the number of the peer side; and among the master number and the associated slave number, select a number as the calling number to be displayed at the peer side according to a preset display policy, and notify the selected number to the communication service processor; and
the service routing logic module 122 is adapted to receive the number of a receiving user sent by a communication service processor, and judge whether the number is the master number of the receiving user; if the number is the master number, provide the master number to the communication service processor; or, if the number is a slave number, provide the master number corresponding to the slave number to the communication service processor; and instruct the communication service processor to route the service to the master number.

The communication service processor that communicates with the SCP in the foregoing embodiment of the invention may be a mobile switching center (MSC) in the call service or a short message service center (SMSC) in the short message service.

The following embodiment provides a system applicable to the foregoing method.

As shown in Figure 7, a communication system includes a master HLR 21, a slave HLR 22, and an SCP 30.

The master HLR 21 and slave HLR 22 are adapted to store the subscription information about the master number and the slave number of a user, wherein the home location of the slave number is different from the home location of the master number.

It should be understood that the master HLR is a concept relative to the slave HLR. An HLR may be a master HLR to some users and a slave HLR to other users.

The SCP 30 is adapted to provide a correspondence between the master number and the slave number of a user, and determine the user number to be displayed at the peer side or route the service to the master number of the user according to the correspondence between the master number and the slave number. The SCP 30 is connected to the master HLR 21 and the slave HLR 22 through a signaling network. From the subscription information stored in the master HLR 21 and/or the slave HLR 22, the SCP 30 may obtain the policy of displaying the number, or store the display policy locally.

The SCP 30 may have a structure of the foregoing SCP 10.

After launching the one card multinumber service of the present invention, an operator can charge users for the one card multinumber service based on multiple factors. For example, a user needs to pay a monthly fee for the one card multinumber service. For the call service, the charging covers these scenarios: (1) when the user roams to the home location of the master number or the slave number, the use of this service does not require roaming charges; (2) when the user roams to a home location, and make calls to or receive calls from the home location, toll charges are not required; and (3) in other scenarios, the charging is as usual. For the charging of a calling one card multinumber service user, the following information needs to be analyzed: (1) analyzing the visited location of the one card multinumber user according to the switch information reported by the MSC, analyzing the home location of the called party according to the called number, and determining whether to require toll charges according to the visited location of the one card multinumber user and the home location of the called party; and (2) analyzing whether to require roaming charges according to the master number and the slave number registered by the one card multinumber user. For the charging of a called one card multinumber service user, the following information needs to be analyzed: analyzing the visited location of the one card multinumber user according to the switch information reported by the MSC, and analyzing whether to require roaming charges and toll charges according to the master number and the slave number registered by the one card multinumber user. This facilitates the user in using the service, and reduces communication costs of the user.

## Claims

1. A method for enabling a mobile user to use multiple numbers on one subscriber identity module, SIM, or user identity module, UIM, **characterized by** comprising:
setting up the correspondence between a original user number of the SIM/UIM card as the master number and an added user number as the slave number in a service control point, SCP, (30; 300) where a home location of the slave number is different from a home location of the master number; and
determining, by the SCP (30; 300), the user number to be displayed at a peer side according to a preset display policy and the correspondence between the master number and the slave number when receiving a master number and a peer number sent by a communication service processor.

2. The method of claim 1, wherein the process of determining the user number to be displayed at the peer side according to the preset display policy and the correspondence between the master number and the slave number when receiving a master number and a peer number sent by a communication service processor comprises:
by a visited mobile switching center, VMSC, of the user, sending the master number, a peer number and location information of the VMSC to an SCP (30; 300);
by the SCP (30; 300), selecting the user number to be displayed at the peer side among the master number and the associated slave number according to a preset display policy;
by the SCP (30; 300), notifying the selected user number for display to the VMSC of the user, and by the VMSC, routing the call to the peer side.

3. The method of claim 2, wherein the process of notifying the selected user number for display to the VMSC comprises:
if the selected number for display is the slave number, returning the slave number to the VMSC of the user; or if the selected number for display is the master number, returning an empty response to the VMSC of the user; and
the call routing to the peer side performed by the VMSC of the user comprises: by the VMSC of the user, sending the user number to be displayed to a VMSC of the peer side, and routing the call to the VMSC of the peer side.

4. The method of claim 1, wherein the process of determining the user number to be displayed at the peer side according to the preset display policy and the correspondence between the master number and the slave number when receiving a master number and a peer number sent by a communication service processor comprises:
by a VMSC of the user, sending a short message delivery point-to-point, SMDPP, request message to a short message service center, SMSC;
by the SMSC, returning a response to the VMSC of the user and providing the master number of the user and the peer number to an SCP;
by the SCP, selecting the user number to be displayed at the peer side among the master number and the associated slave number according to a preset display policy, and returning the selected number to the SMSC; and
by the SMSC, obtaining the visited location of the peer side from the HLR of the peer number, and sending the short message and the selected number for display to a VMSC of the peer side.

5. The method of any of claims 2-4, wherein the SCP (30; 300) determines the user number to be displayed at the peer side according to the specific number of the peer side.

6. The method of any of claims 2-4, wherein the SCP (30; 300) determines the user number to be displayed at the peer side according to a visited location of the user.

7. The method of any of claims 2-4, wherein the SCP (30; 300) determines the user number to be displayed at the peer side according to a home location of the peer number.

8. A service control point, SCP, (30) **characterized by** comprising:
an associating unit (11), adapted to provide a correspondence between an original user number of a subscriber identity module, SIM, or user identity module, UIM, card as a master number and an added user number as a slave number of a user, where a home location of the slave number is different from a home location of the master number; and
a service logic unit (12), adapted to comprise a number display logic module (121), adapted to receive the master number of an originating user sent by a communication service processor, and a number of the peer side; and among the master number and the associated slave number, select a number as the calling number to be displayed at the peer side according to a preset display policy, and notify the selected number to the communication service processor.

9. A communication system, **characterized by** comprising a service control point, SCP (30; 300) according to claim 8 and a home location register, HLR, wherein
the HLR is adapted to store a subscription information about a master number and a slave number of a user.

## Patentansprüche

1. Verfahren zum Ermöglichen für einen mobilen Anwender, mehrere Nummern auf einem Teilnehmerkennungsmodul, SIM, oder einem Anwenderkennungsmodul, UIM, zu verwenden, **dadurch gekennzeichnet, dass** es Folgendes umfasst:
Einstellen der Zuordnung zwischen einer ursprünglichen Anwender-Nummer der SIM/UIM-Karte als der Master-Nummer und einer hinzugefügten Anwender-Nummer als der Slave-Nummer in einem Dienststeuerpunkt, SCP, (30; 300), wobei ein Heimatstandort der Slave-Nummer von einem Heimatstandort der Master-Nummer verschieden ist; und
Bestimmen der Anwender-Nummer, die an einer Partnerseite angezeigt werden soll, durch den SCP (30; 300) gemäß einer voreingestellten Anzeigestrategie und der Zuordnung zwischen der Master-Nummer und der Slave-Nummer, wenn eine Master-Nummer und eine Partnernummer, die von einem Kommunikationsdienstprozessor gesendet werden, empfangen werden.

2. Verfahren nach Anspruch 1, wobei der Prozess des Bestimmens der Anwender-Nummer, die gemäß der voreingestellten Anzeigestrategie und der Zuordnung zwischen der Master-Nummer und der Slave-Nummer an einer Partnerseite angezeigt werden soll, wenn eine Master-Nummer und eine Partnernummer, die von einem Kommunikationsdienstprozessor gesendet werden, empfangen werden, Folgendes umfasst:
Senden durch eine besuchte Mobilfunkvermittlungsstelle, VMSC, des Anwenders der Master-Nummer einer Partnernummer und der Standortinformationen der VMSC zu einem SCP (30; 300);
Auswählen durch den SCP (30; 300) der Anwender-Nummer, die an der Partnerseite angezeigt werden soll, aus der Master-Nummer und der zugeordneten Slave-Nummer gemäß einer voreingestellten Anzeigestrategie;
Melden durch den SCP (30; 300) der ausgewählten Anwender-Nummer zum Anzeigen zu der VMSC des Anwenders und Lenken der Verbindung zu der Partnerseite durch die VMSC.

3. Verfahren nach Anspruch 2, wobei der Prozess des Meldens der ausgewählten Anwender-Nummer zum Anzeigen zu der VMSC Folgendes umfasst:
wenn die ausgewählte Nummer zum Anzeigen die Slave-Nummer ist, Zurückgeben der Slave-Nummer zu der VMSC des Anwenders; oder wenn die ausgewählte Nummer zum Anzeigen die Master-Nummer ist, Zurückgeben einer leeren Antwort zu der VMSC des Anwenders; und
die Verbindungslenkung zu der Partnerseite, die durch die VMSC des Anwenders ausgeführt wird, Folgendes umfasst: Senden der Anwender-Nummer, die angezeigt werden soll, durch die VMSC des Anwenders zu einer VMSC der Partnerseite und Lenken der Verbindung zu der VMSC der Partnerseite.

4. Verfahren nach Anspruch 1, wobei der Prozess des Bestimmens der Anwender-Nummer, die an einer Partnerseite gemäß der voreingestellten Anzeigestrategie und der Zuordnung zwischen der Master-Nummer und der Slave-Nummer angezeigt werden soll, wenn eine Master-Nummer und eine Partnernummer, die von einem Kommunikationsdienstprozessor gesendet wird, empfangen werden, Folgendes umfasst:
Senden einer Kurznachrichtenzustellungs-Point-to-Point-Anforderungsnachricht, SMDPP-Anforderungsnachricht, durch eine VMSC des Anwenders zu einem Kurznachrichtendienstzentrum, SMSC;
Zurückgeben einer Antwort durch das SMSC zu der VMSC des Anwenders und Bereitstellen der Master-Nummer des Anwenders und der Partnernummer für einen SCP;
Auswählen der Anwender-Nummer, die an der Partnerseite angezeigt werden soll, aus der Master-Nummer und der zugeordneten Slave-Nummer durch den SCP gemäß einer voreingestellten Anzeigestrategie und Zurückgeben der ausgewählten Nummer zu dem SMSC; und
Erhalten des besuchten Standorts der Partnerseite aus der HLR der Partnernummer und Senden der Kurznachricht und der ausgewählten Nummer zur Anzeige zu einer VMSC der Partnerseite durch den SMSC.

5. Verfahren nach einem der Ansprüche 2-4, wobei der SCP (30; 300) die Anwender-Nummer, die an der Partnerseite angezeigt werden soll, gemäß der spezifischen Nummer der Partnerseite bestimmt.

6. Verfahren nach einem der Ansprüche 2-4, wobei der SCP (30; 300) die Anwender-Nummer, die an der Partnerseite angezeigt werden soll, gemäß einem besuchten Standort des Anwenders bestimmt.

7. Verfahren nach einem der Ansprüche 2-4, wobei der SCP (30; 300) die Anwender-Nummer, die an der Partnerseite angezeigt werden soll, gemäß einem Heimatstandort der Partnernummer bestimmt.

8. Dienststeuerpunkt, SCP, (30), **dadurch gekennzeichnet, dass** er Folgendes umfasst:
eine Zuordnungseinheit (11), die ausgelegt ist, eine Zuordnung zwischen einer ursprünglichen Anwender-Nummer einer Teilnehmerkennungsmodulkarte, SIM-Karte, oder Anwenderkennungsmodulkarte, UIM-Karte, als eine Master-Nummer und einer hinzugefügten Anwender-Nummer als eine Slave-Nummer des Anwenders bereitzustellen, wobei sich ein Heimatstandort der Slave-Nummer von einem Heimatstandort der Master-Nummer unterscheidet; und
eine Dienstlogikeinheit (12), die ausgelegt ist, ein Nummernanzeigelogikmodul (121), das zum Empfangen der Master-Nummer eines Ausgangsanwenders, die von einem Kommunikationsdienstprozessor gesendet wird, und einer Nummer der Partnerseite ausgelegt ist, zu umfassen; und eine Nummer aus der Master-Nummer und der zugeordneten Slave-Nummer als die rufende Nummer, die gemäß einer voreingestellten Anzeigestrategie an der Partnerseite angezeigt werden soll, auszuwählen und die ausgewählte Nummer zu dem Kommunikationsdienstprozessor zu melden.

9. Kommunikationssystem, **dadurch gekennzeichnet, dass** es einen Dienststeuerpunkt, SCP (30; 300) gemäß Anspruch 8 und eine Heimatdatei, HLR, umfasst, wobei die HLR ausgelegt ist, Abonnementinformationen über eine Master-Nummer und eine Slave-Nummer eines Anwenders zu speichern.

## Revendications

1. Procédé pour permettre à un utilisateur de mobile d'utiliser plusieurs numéros sur un module d'identité d'abonné, SIM, ou un module d'identité d'utilisateur, UIM, **caractérisé en ce qu'**il comprend les étapes suivantes :
définir la correspondance entre un numéro d'utilisateur original de la carte SIM/UIM comme numéro principal et un numéro d'utilisateur ajouté comme numéro esclave dans un point de contrôle de service, SCP, (30 ; 300) où une localisation nominale du numéro esclave est différente d'une localisation nominale du numéro principal ; et
déterminer, par l'intermédiaire du SCP (30 ; 300), le numéro d'utilisateur à afficher au niveau d'un côté homologue conformément à une politique d'affichage prédéfinie et à la correspondance entre le numéro principal et le numéro esclave lors de la réception d'un numéro principal et d'un numéro homologue envoyés par un processeur de service de communication.

2. Procédé selon la revendication 1, dans lequel le processus comprenant de déterminer le numéro d'utilisateur à afficher au niveau du côté homologue conformément à la politique d'affichage prédéfinie et à la correspondance entre le numéro principal et le numéro esclave lors de la réception d'un numéro principal et d'un numéro homologue envoyés par un processeur de service de communication, comprend les étapes suivantes :
par l'intermédiaire d'un centre de commutation mobile visité, VMSC, de l'utilisateur, envoyer le numéro principal, un numéro homologue et des informations de localisation du VMSC vers un SCP (30 ; 300) ;
par l'intermédiaire du SCP (30 ; 300), sélectionner le numéro d'utilisateur à afficher au niveau du côté homologue parmi le numéro principal et le numéro esclave associé conformément à une politique d'affichage prédéfinie ;
par l'intermédiaire du SCP (30 ; 300), notifier le numéro d'utilisateur sélectionné pour affichage au VMSC de l'utilisateur, et par l'intermédiaire du VMSC, router l'appel vers le côté homologue.

3. Procédé selon la revendication 2, dans lequel le processus comprenant de notifier le numéro d'utilisateur sélectionné pour affichage au VMSC comprend les étapes suivantes :
si le numéro sélectionné pour affichage est le numéro esclave, retourner le numéro esclave au VMSC de l'utilisateur ; ou si le numéro sélectionné pour affichage est le numéro principal, retourner une réponse vide au VMSC de l'utilisateur ; et
le routage d'appel vers le côté homologue effectué par l'intermédiaire du VMSC de l'utilisateur comprend les étapes suivantes : par l'intermédiaire du VMSC de l'utilisateur, envoyer le numéro d'utilisateur à afficher à un VMSC du côté homologue et router l'appel vers le VMSC du côté homologue.

4. Procédé selon la revendication 1, dans lequel le processus comprenant de déterminer le numéro d'utilisateur à afficher au niveau du côté homologue conformément à la politique d'affichage prédéfinie et à la correspondance entre le numéro principal et le numéro esclave lors de la réception d'un numéro principal et d'un numéro homologue envoyés par l'intermédiaire d'un processeur de service de communication, comprend les étapes suivantes :
par l'intermédiaire d'un VMSC de l'utilisateur, envoyer un message de demande SMDPP (délivrance de message court point à point) à un centre de service de message court, SMSC ;
par l'intermédiaire du SMSC, retourner une réponse au VMSC de l'utilisateur et fournir le numéro principal de l'utilisateur et le numéro homologue à un SCP ;
par l'intermédiaire du SCP, sélectionner le numéro d'utilisateur à afficher au niveau du côté homologue parmi le numéro principal et le numéro esclave associé conformément à une politique d'affichage prédéfinie, et retourner le numéro sélectionné au SMSC ; et
par l'intermédiaire du SMSC, obtenir la localisation visitée du côté homologue depuis le HLR du numéro homologue et envoyer le message court et le numéro sélectionné pour affichage à un VMSC du côté homologue.

5. Procédé selon l'une quelconque des revendications 2 à 4, dans lequel le SCP (30 ; 300) détermine le numéro d'utilisateur à afficher au niveau du côté homologue conformément au numéro spécifique du côté homologue.

6. Procédé selon l'une quelconque des revendications 2 à 4, dans lequel le SCP (30 ; 300) détermine le numéro d'utilisateur à afficher au niveau du côté homologue conformément à une localisation visitée de l'utilisateur.

7. Procédé selon l'une quelconque des revendications 2 à 4, dans lequel le SCP (30 ; 300) détermine le numéro d'utilisateur à afficher au niveau du côté homologue conformément à une localisation nominale du numéro homologue.

8. Point de contrôle de service, SCP, (30) **caractérisé en ce qu'**il comprend :
une unité d'association (11), conçue pour fournir une correspondance entre un numéro d'utilisateur original d'une carte de module d'identité d'abonné, SIM, ou de module d'identité d'utilisateur, UIM, comme numéro principal et un numéro d'utilisateur ajouté comme numéro esclave d'un utilisateur, où une localisation nominale du numéro esclave est différente d'une localisation nominale du numéro principal ; et
une unité logique de service (12), conçue pour comprendre un module logique d'affichage de numéro (121), conçu pour recevoir le numéro principal d'un utilisateur origine envoyé par l'intermédiaire d'un processeur de service de communication, et un numéro du côté homologue ; et parmi le numéro principal et le numéro esclave associé, pour sélectionner un numéro comme numéro appelant à afficher au niveau du côté homologue conformément à une politique d'affichage prédéfinie, et pour notifier le numéro sélectionné au processeur de service de communication.

9. Système de communication, **caractérisé en ce qu'**il comprend un point de contrôle de service, SCP (30 ; 300) selon la revendication 8 et un registre de localisation nominale, HLR, dans lequel :
le HLR est conçu pour stocker des informations d'abonnement concernant un numéro principal et un numéro esclave d'un utilisateur.
